# EUROPÄISCHE PATENTSCHRIFT

(11) **EP 1 633 964 B1**
(45) Veröffentlichungstag und Bekanntmachung des Hinweises auf die Patenterteilung: **11.04.2007**
(21) Anmeldenummer: 04735239.8
(22) Anmeldetag: 28.05.2004
(51) Int. Cl.: F02D 9/10, F16K 1/22, F02D 11/10, F16K 1/26

(54) **DROSSELKLAPPEN-VERSTELLVORRICHTUNG**
THROTTLE VALVE POSITIONING DEVICE
DISPOSITIF DE REGLAGE DE PAPILLON DES GAZ

(30) Priorität: 16.06.2003 DE 10327045
(43) Veröffentlichungstag der Anmeldung: 15.03.2006
(73) Patentinhaber: SIEMENS AKTIENGESELLSCHAFT, 80333 München (DE)
(72) Erfinder: HANNEWALD, Thomas, 64347 Griesheim (DE); KÖHLER, Stefan, 60437 Frankfurt/Main (DE)
(86) Internationale Anmeldenummer: PCT/EP2004/050958
(87) Internationale Veröffentlichungsnummer: WO 2004/113702

(56) Entgegenhaltungen:
- EP-A- 1 098 079
- EP-A- 1 126 146
- DE-A- 10 142 452
- US-A- 1 671 069
- US-A- 2 934 312
- US-A- 3 260 502
- US-A- 3 556 475
- US-A- 3 627 261

## Beschreibung

Die Erfindung befasst sich mit einer Drosselklappen-Verstellvorrichtung mit einem Gehäuse, das eine Lagerung für eine Drosselklappenwelle bildet und einen Drosselklappenstutzen umfasst, in welchem eine Drosselklappe, die auf der Drosselklappenwelle sitzt, die durch einen Wellendurchtritt in den Drosselklappenstutzen mündet, verschwenkbar ist, wobei das Gehäuse geteilt ausgeführt ist und der Umfang der Drosselklappe wenigstens einseitig neben der Drosselklappenwelle mit Abstand zu einem Durchtritt der Drosselklappenwelle in den Drosselklappenstutzen liegt.

Bei den bisher bekannten Anordnungen von Drosselklappen im Drosselklappenstutzen, die mittig auf oder in einem Schlitz in der Drosselklappenwelle sitzen, kann ein Vorbeiströmen von Leckluft im Bereich zwischen Drosselklappenwelle, Drosselklappe und Drosselklappenstutzen und auch über die Wellendurchbrüche in den Lagerstellen meist nicht vermieden werden. Erschwert wird die Vermeidung von Leckluft insbesondere bei geteilt ausgeführten Gehäusen mit zwei Gehäuseschalen, da dann die Trennebene der beiden Gehäusehälften ebenfalls im Bereich der Drosselklappe liegt, so dass aufgrund des im Bereichs der Drosselklappe entstehenden sehr großen Unterdrucks Leckluft in diesem kaum vollständig abzudichtenden Bereich gezogen wird.

Bisher versuchte man, dieses Problem durch eine Minimierung der Wellendurchbrüche und des Formversatzes zwischen den Gehäusehälften zu reduzieren, wobei dieser Weg das Problem nicht grundsätzlich beseitigen kann, sondern bei erhöhten Herstellungskosten nur für eine gewisse Verbesserung bezüglich der Leckluft sorgen kann.

Drosselklappen-Verstellvorrichtungen der eingangs beschriebenen Art sind aus der US 1,671,069, der US 3,556,475, der US 2,934,312 und der US 3,260,502 bekannt.

Die Aufgabe der vorliegenden Erfindung besteht darin, eine Drosselklappen-Verstellvorrichtung zu schaffen, bei welcher die Leckluft minimiert ist.

Erfindungsgemäß wird die Aufgabe dadurch gelöst, dass das Gehäuse zwischen seinen Hälften einen Stellantrieb und gegebenenfalls ein Getriebe zum Verstellen der Drosselklappe über die Drosselklappenwelle aufweist.

Die Verlagerung des Drosselklappenrandes weg vom Wellendurchtritt und von der Trennfuge eines geteilten Gehäuses erlaubt eine Minimierung der Leckluft, da ein sauberes Abdichten zwischen dem vorzugsweise mit einem Dichtring versehenen Umfang der Drosselklappe und der im wesentlichen fugenfrei abseits des Wellendurchtrittes und einer Gehäusetrennfuge ausbildbaren Innenseite des Drosselklappenstutzens. Die Verlagerung kann beispielsweise durch eine mit seitlichem Versatz an der Drosselklappenwelle angebrachte Drosselklappe oder vorzugsweise dadurch erreicht werden, dass die Drosselklappe in einem spitzen Winkel zu der Drosselklappenwelle liegt, d. h. die Drosselklappenwelle durchstösst die Drosselklappe mittig in einem spitzen Winkel. Ein elastischer Dichtring, der vorzugsweise in einer Umfangsnut eine gewisse radiale Begweglichkeit besitzt, kann für einen Ausgleich der durch den Versatz und/oder die Schrägstellung der Drosselklappe bedingten Abweichungen sorgen.

Insbesondere bei der letztgenannten Möglichkeit ist eine besonders leckluftarme Ausbildung möglich, insbesondere wenn der Drosselklappenumfang wenigstens auf der Seite des Drosselklappenwellendurchtrittes im Drosselklappenstutzen saugseitig liegt. Bei dieser Ausbildung ist der für die Abdichtung besonders kritische Durchtritt zum Antrieb hin in einem Bereich angeordnet, der vor der Drosselklappe liegt, so dass der Wellendurchtritt von dem saugseitig auftretenden Unterdruck abgeschirmt ist. Dient beispielsweise das Gehäuse gleichzeitig zur Aufnahme eines Stellantriebes und gegebenenfalls eines zwischengeschalteten Getriebes, lässt sich die Unterschale als abgeschlossene luftdichte Einheit gestalten und der Getriebekasten wird auf keinen Fall mit Unterdruck beaufschlagt. Dies vereinfacht wiederum die Abdichtung der beiden Gehäusehälften, da die Flanschlänge bei derartigen Verstellvorrichtungen relativ lang ist.

Bei einer geneigten Ausbildung der Drosselklappe liegt bei der zuvor beschriebenen Ausführungsform das gegenüber des Wellendurchtrittes angeordnete Wellenlager im Bereich des Unterdruckes, was jedoch auf dieser Seite der Verstellvorrichtung relativ leicht zu beherrschen ist. Besonders bevorzugt ist eine Ausführungsform, bei welcher die Drosselklappenwelle an dieser Stelle in einem geschlossenen Lagerauge gelagert ist, beispielsweise unmittelbar im Duroplast des Stutzenmaterials.

Zur Vermeidung eines Luftdurchtrittes zwischen Drosselklappe und Drosselklappenwelle bei relativ zur Welle schräggestellter Drosselklappe sind Maßnahmen zur Abdichtung in diesem Bereich zweckmäßig. Die Drosselklappe selbst kann aus duroplastischem oder thermoplastischem Kunststoff bestehen, beispielsweise gefülltem PEI oder gefülltem PPS. Die Drosselklappe kann an einer Hülse aus Metall oder Kunststoff angespritzt sein, die die Welle ganz oder teilweise umfasst und an der Drosselklappenwelle festlegbar ist. Bei einer Hülse aus Kunststoff kann diese wiederum beispielsweise auch einstückig mit der Drosselklappe an der Drosselklappenwelle angespritzt sein, während bei metallischen Hülsen diese vorzugsweise mit der Drosselklappenwelle verschraubt oder mit dieser verschweißt sind.

Nachfolgend wird anhand der beigefügten Zeichnungen näher auf Ausführungsbeispiele der Erfindung eingegangen. Es zeigen:
- Fig. 1: eine Schrägansicht einer Drosselklappen-Verstellvorrichtung mit abgenommener oberer Gehäusehälfte;
- Fig. 2: eine Schnittdarstellung der Drosselklappen-Verstellvorrichtung nach Fig. 1 mit Gehäuseoberteil;
- Fig. 3: eine Ansicht einer weiteren Ausführungsform einer Drosselklappen-Verstellvorrichtung mit angehobenem Gehäuseoberteil.

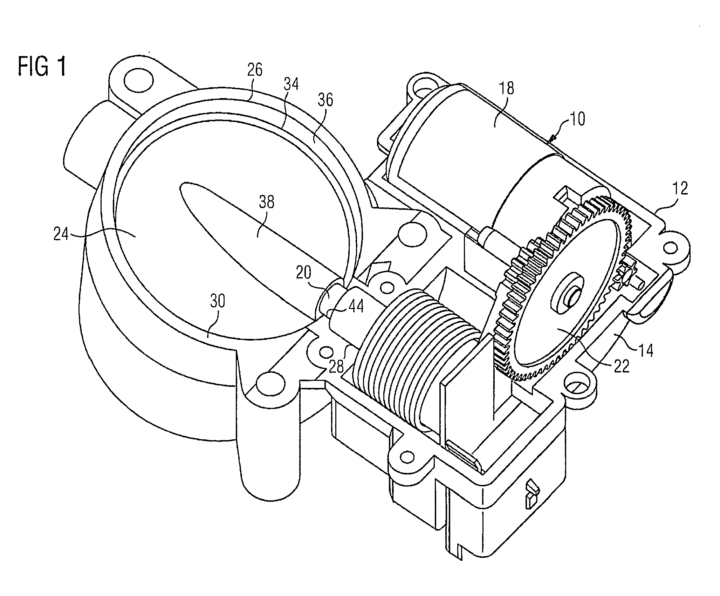

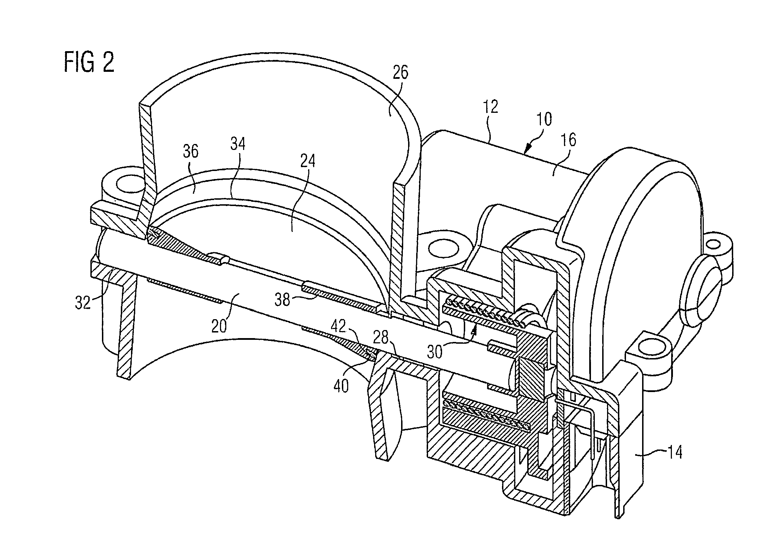

In Fig. 1 ist eine Drosselklappen-Verstellvorrichtung 10 gezeigt, die im wesentlichen aus einem Gehäuse 12 mit einer unteren Gehäusehälfte 14 und einer oberen Gehäusehälfte 16, einem Stellantrieb 18, einer Drosselklappenwelle 20, die über ein Getriebe 22 mit dem Stellantrieb 18 gekoppelt ist, und einer auf der Drosselklappenwelle 20 sitzenden Drosselklappe 24 besteht, die in einem durch die beiden Gehäusehälften 14, 16 ausgebildeten Drosselklappenstutzen 26 verschwenkbar ist. Das Gehäuse bildet neben einer Aufnahme für den Stellantrieb 18 und das Getriebe 22 auch eine Lagerung für die Drosselklappenwelle 20 an einer ersten, antriebsseitigen Lagerstelle 28 in der Trennfuge 30 zwischen den beiden Gehäusehälften 14, 16 und einer zweiten Lagerstelle 32 auf der dem Antrieb im Drosselklappenstutzen 26 gegenüberliegenden Seite. Die zweite Lagerstelle 32 liegt entfernt von der Trennfuge 30 zwischen den Gehäusehälften und kann auch als geschlossenes Lagerauge ausgeführt sein, während in Fig. 2 die Lagerstelle 32 nach außen offen gezeigt ist.

Der Stellantrieb 18 und das Getriebe 22 sowie die sie umschließenden Bereiche der beiden Gehäusehälften 14, 16 sind in an sich bekannter Weise ausgeführt und sollen deswegen hier nicht näher erörtert werden.

Abweichend von herkömmlichen Lösungen sitzt die Drosselklappe 24 nicht mittig auf der Drosselklappenwelle oder in einer geschlitzten Drosselklappenwelle, sondern ist derart versetzt zu der Drosselklappenwelle ausgebildet, daß der Umfang 34 der Drosselklappe 24 neben der Drosselklappenwelle 20 innenseitig am Drosselklappenstutzen 26 anliegt. Bei dem gezeigten Ausführungsbeispiel ist die.Drosselklappe 24 hierzu geneigt bezüglich der Drosselklappenwelle 20 angeordnet, wobei ein Winkelbereich zwischen 5° und 25° zweckmäßig ist. Der Drosselklappenstutzen 26 ist im Anlagebereich des Umfanges 34 der Drosselklappe 24 mit einem entsprechend geneigten Bereich 36 ausgebildet, dessen Wandungen senkrecht zu der durch die Drosselklappe 24 in ihrer vollständig geschlossenen Stellung definierten Ebene liegen. Die Anpassung der Wandung des Drosselklappenstutzens an die Neigung der Drosselklappe relativ zur Drosselklappenwelle verringert die Betätigungskräfte und vermeidet ein Verklemmen in der geschlossenen Stellung.

Bei dem in Fig. 1 und 2 gezeigten Ausführungsbeispiel ist der geneigte Bereich 36 im wesentlichen durch die untere Gehäusehälfte 14 ausgebildet, d. h. in der geschlossenen Stellung der Drosselklappe ist der geneigte Bereich 36, der mit der Drosselklappe für die Abdichtung sorgt, fugenfrei ausgebildet. Dies sorgt für eine hervorragende Dichtwirkung, so dass die Leckluft auf ein Minimum reduziert ist.

Die Drosselklappe 24 ist mit Hilfe einer Hülse 38 drehstarr mit der Welle verbunden, wobei die Drosselklappe mit der Hülse unmittelbar an der aus Stahl bestehenden Drosselklappenwelle 20 angespritzt oder über ein Metallinsert, das an der Welle angeschweißt oder mit dieser verschraubt ist, an der Welle festgelegt sein kann. Bei der Lösung mit einem Metallinsert kann die Drosselklappe wiederum an diesem angespritzt sein. Als Materialien für den Körper der Drosselklappe sind Duroplast oder Thermoplast, wie z. B. gefülltes PEI (Polyetherimid) oder gefülltes PPS (Polyphenylensulfid) geeignet.

Zur Verbesserung der Abdichtung zwischen Drosselklappe und Drosselklappenstutzen 26 ist im Umfang 34 der Drosselklappe 24 ein Kolbenring oder Dichtring 40 eingelassen, der aus einem elastischen Kunststoff, beispielsweise PEEK (Polyaryletherketon, Polyetheretherketon) mit PTFE-Füllung oder reinem PTFE bestehen kann. Dieser Kolbenring 40 ist in einer Umfangsnut 42 gehalten, die derart tief ausgebildet ist, dass der Kolbenring 40 elastisch in radialer Richtung eingedrückt werden kann. Die radiale Beweglichkeit des elastischen Kolbenrings 40 und seine Eigenelastizität sorgen für einen Ausgleich der durch die Schrägstellung der Drosselklappe bezüglich der Drosselklappenwelle 20 bedingten Abweichungen der Bewegungsbahn beim Verschwenken der Drosselklappe, so dass dennoch eine optimale Dichtwirkung erreicht werden kann. Ferner ist der Kolbenring 40 geeignet, Herstellungstoleranzen auszugleichen, so dass diese ebenfalls nicht die Ursache für Leckluft sein können.

Bedingt durch die besondere Anordnung der Drosselklappe 24 bei der in Fig. 1 und 2 gezeigten Drosselklappen-Verstellvorrichtung 10 ist der Durchtritt 44 der Drosselklappenwelle 20 in den Drosselklappenstutzen 26 vom Unterdruck entlastet, da die Unterdruckseite im Sinne der Darstellung unterhalb der Drosselklappe 24 und die Drosselklappenwelle auf der Frischluftseite liegt. Dies bedeutet, dass insbesondere bei einer geschlossenen Ausbildung der zweiten Lagerstelle 32 eine besonders gute Abdichtung gegen Leckluft erreicht wird, da das geschlossene Gehäuse 12 nicht über die Durchtrittsstelle 44 mit Unterdruck beaufschlagt werden kann. Dadurch wird die Abdichtung der beiden Gehäusehälften 14, 16 gegeneinander vereinfacht.

Die beiden Gehäusehälften 14, 16 können aus Kunststoff gefertigt sein, beispielsweise Duroplast, das sich auch zur unmittelbaren Ausbildung der zweiten Lagerstelle 32 eignet, so dass die Drosselklappenwelle bei der Montage dort lediglich in das geschlossene Lagerauge gesteckt werden muss.

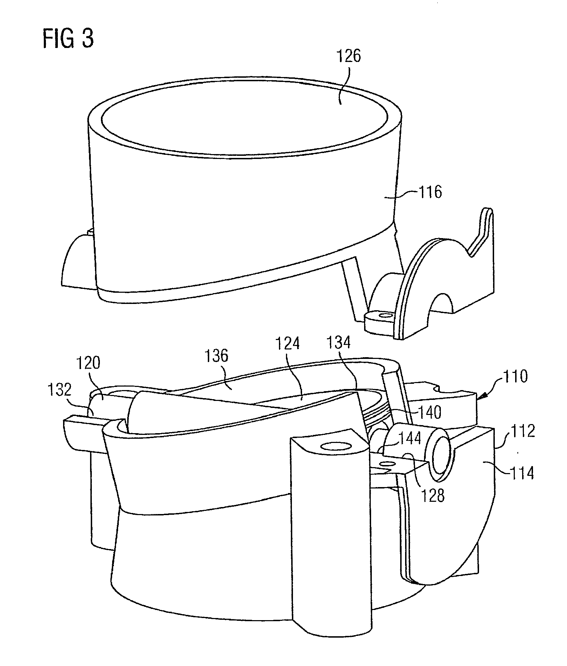

Bei der in Fig. 3 gezeigten Ausführungsform einer Drosselklappen-Verstellvorrichtung 110, bei welcher zur Vereinfachung der Antrieb und die diesen umschließenden Bereiche eines Gehäuses 112 weggelassen worden sind, verläuft eine Trennfuge 130 zwischen den beiden Gehäusehälften 114, 116 sowohl durch die erste antriebsseitige Lagerstelle 128 der Drosselklappenwelle 120 als auch die gegenüberliegende zweite Lagerstelle 132, d. h. die Trennfuge 130 liegt im wesentlichen in der durch die Lage der Drosselklappenwelle 120 definierten Ebene. Lediglich im Bereich des Drosselklappenstutzen 26 ist die Trennfuge 130 entsprechend dem geneigten Bereich 136 geneigt mit einer der Drosselklappenneigung entsprechenden Schräge ausgeführt. Dies macht es notwendig, zwischen dem Bereich der oberen Gehäusehälfte 116, der einen Teil des Drosselklappenstutzens 126 bildet, und dem übrigen Gehäusebereich einen parallel zur Strömungsrichtung im Drosselklappenstutzen 26 ausgebildeten Wandabschnitt 150 vorzusehen, so dass zwei Trennfugen im Anlagebereich des Dichtrings 140 am Umfang 134 der Drosselklappe 120 entstehen. Diese sind jedoch wegen ihres im wesentlichen senkrechten Verlaufs zur Bewegungsrichtung des Dichtungsrings in diesem Bereich beim Verstellen der Drosselklappe unkritisch für die Abdichtung. Der Vorteil der in Fig. 3 gezeigten Ausführungsform besteht in der einfacheren Montage, da die Einheit aus Antrieb, Getriebe, Drosselklappenwelle und Drosselklappe bei getrennten Gehäusehälften 114, 116 einfach in ihre Lagerstellen eingelegt und das Gehäuse 112 anschließend einfach geschlossen werden kann. Die in Fig. 1 und 2 gezeigte Ausführungsform bietet eine noch weiter verbesserte Abdichtung mit einem gewissen Erschwernis bei der Montage wegen der nicht geteilten zweiten Lagerstelle 32, da zunächst die Drosselklappenwelle in diese Lagerstelle eingesteckt und anschließend erst die Einheit aus Getriebe und Stellantrieb in die Aufnahmen der unteren Gehäusehälfte 114 eingelegt werden kann.

Grundsätzlich sind weitere Ausführungsformen der gezeigten Drosselklappen-Verstellvorrichtungen vorstellbar, die das gemeinsame Merkmal besitzen, dass der Drosselklappenumfang seitlich neben der Drosselklappenwelle wenigstens im Bereich der Durchtrittsstelle in der Drosselklappenwelle in den Gehäusestutzen liegt. Ein einfacher seitlicher Versatz der Drosselklappe bezüglich der Drosselklappenwelle ohne oder mit nur sehr geringer Schrägstellung ist grundsätzlich ebenfalls denkbar, wenngleich zum Erzielen einer guten Dichtwirkung hierzu eine entsprechende Anpassung der Innenkontur des Drosselklappenstutzens an die Bewegungsbahn der verschwenkenden Drosselklappe notwendig sein könnte. Grundsätzlich ist es auch denkbar, den Antrieb nicht unmittelbar zwischen den beiden Gehäusehälften, sondern entfernt von der Drosselklappenwelle anzuordnen, so dass die beiden Gehäusehälften lediglich den Drosselklappenstutzen und die Lagerung für die Drosselklappenwelle bilden.

## Patentansprüche

1. Drosselklappen-Verstellvorrichtung mit einem Gehäuse (12; 112), das eine Lagerung (28, 32; 128, 130) für eine Drosselklappenwelle (30; 130) bildet und einen Drosselklappenstutzen (26; 126) umfasst, in welchem eine Drosselklappe (24; 124), die auf der Drosselklappenwelle (20; 120) sitzt, die durch einen Wellendurchtritt (44; 144) in den Drosselklappenstutzen (26; 126) mündet, verschwenkbar ist, wobei das Gehäuse (12; 112) geteilt ausgeführt ist und der Umfang (34; 134) der Drosselklappe (24; 124) wenigstens einseitig neben der Drosselklappenwelle (20; 120) mit Abstand zu einem Durchtritt (44; 144) der Drosselklappenwelle (20; 120) in den Drosselklappenstutzen (26; 126) liegt, **dadurch gekennzeichnet, dass** das Gehäuse (12) zwischen seinen Hälften (14, 16) einen Stellantrieb (18) und gegebenenfalls ein Getriebe (22) zum Verstellen der Drosselklappe (24) über die Drosselklappenwelle (20) aufweist.

2. Drosselklappen-Verstellvorrichtung nach Anspruch 1, **dadurch gekennzeichnet, dass** der Drosselklappenumfang (34; 134) wenigstens auf der Seite des Drosselklappenwellendurchtrittes (44; 144) zur Antriebsseite auf der Unterdruckseite bezogen auf die Drosselklappenwelle (20) liegt.

3. Drosselklappen-Verstellvorrichtung nach Anspruch 1 oder 2, **dadurch gekennzeichnet, dass** die Drosselklappe (24; 124) in einem spitzen Winkel zu der Drosselklappenwelle (20; 120) angeordnet ist.

4. Drosselklappen-Verstellvorrichtung nach Anspruch 3, **dadurch gekennzeichnet, dass** der spitze Winkel zwischen 5° und 25° beträgt.

5. Drosselklappen-Verstellvorrichtung nach Anspruch 3 oder 4, **dadurch gekennzeichnet, dass** der Drosselklappenstutzen (26; 126) im Bereich des anliegenden Drosselklappenumfangs (34; 134) einen Knick (36; 136) aufweist, dessen Wandungen senkrecht zur Neigungsrichtung der Drosselklappe (24; 124) liegen.

6. Drosselklappen-Verstellvorrichtung nach einem der vorhergehenden Ansprüche, **dadurch gekennzeichnet, dass** eine Trennfuge (30; 130) zwischen den Gehäuseteilen (14, 16; 114, 116) außerhalb des Anlagebereiches des Drosselklappenumfangs (34; 134) an der Innenseite des Drosselklappenstutzens (26; 126) liegt.

7. Drosselklappen-Verstellvorrichtung nach einem der Ansprüche 3 bis 6, **dadurch gekennzeichnet, dass** die Drosselklappenwelle (20) auf der dem Wellendurchtritt (44) zum Antrieb hin gegenüberliegenden Seite des Drosselklappenstutzens (26) in einem geschlossenen Lagerauge gelagert ist.

8. Drosselklappen-Verstellvorrichtung nach Anspruch 7, **dadurch gekennzeichnet, dass** die Lagerung der Drosselklappenwelle (20) unmittelbar im Lagerauge (32) des aus Kunststoff, z. B. einem duroplastischen Material, gefertigten Gehäuseteil (14) erfolgt.

9. Drosselklappen-Verstellvorrichtung nach einem der vorhergehenden Ansprüche, **dadurch gekennzeichnet, dass** die Drosselklappe (24; 124) an ihrem Umfang (34; 134) mit einem Dichtring (40; 140) versehen ist.

10. Drosselklappen-Verstellvorrichtung nach Anspruch 9, **dadurch gekennzeichnet, dass** der Dichtring (40; 140) in einer Umfangsnut (42) radial beweglich gehalten ist.

11. Drosselklappen-Verstellvorrichtung nach Anspruch 9 oder 10, **dadurch gekennzeichnet, dass** der Dichtring (40) aus PEEK mit einer Füllung aus PTFE oder aus PTFE besteht.

12. Drosselklappen-Verstellvorrichtung nach einem der vorhergehenden Ansprüche, **dadurch gekennzeichnet, dass** die Drosselklappe (24; 124) aus Duroplast oder Thermoplast besteht.

13. Drosselklappen-Verstellvorrichtung nach Anspruch 12, **dadurch gekennzeichnet, dass** die Drosselklappe aus gefülltem PEI oder gefülltem PPS besteht.

14. Drosselklappen-Verstellvorrichtung nach Anspruch 12 oder 13, **dadurch gekennzeichnet, dass** die Drosselklappe (24; 124) an einer Hülse (38; 138) aus Metall oder Kunststoff angespritzt ist, die die Drosselklappenwelle (20; 120) ganz oder teilweise umfasst und an dieser festgelegt ist.

15. Drosselklappen-Verstellvorrichtung nach Anspruch 14, **dadurch gekennzeichnet, dass** die Hülse (38; 138) aus Kunststoff mit der Drosselklappe (24; 124) an der Drosselklappenwelle (20; 120) angespritzt ist.

16. Drosselklappen-Verstellvorrichtung nach Anspruch 15, **dadurch gekennzeichnet, dass** die metallische Hülse an der Drosselklappenwelle angeschweißt oder mit dieser verschweißt ist.

## Claims

1. Throttle valve positioning device having a housing (12; 112) which forms a bearing arrangement (28, 32; 128, 132) for a throttle valve shaft (30; 130) and comprises a throttle body (26; 126) in which a throttle valve (24; 124) is pivotable, said throttle valve (24; 124) sitting on the throttle valve shaft (20; 120), which leads through the shaft passage (44; 144) into the throttle body (26; 126), the housing (12; 112) being of split design, and the circumference (34; 134) of the throttle valve (24; 124), at least on one side, lying next to the throttle valve shaft (20; 120) at a distance from a passage (44; 144) of the throttle valve shaft (20; 120) in the throttle body (26; 126), **characterized in that** the housing (12), between its halves (14, 16), has an actuator (18) and possibly gearing (22) for positioning the throttle valve (24) via the throttle valve shaft (20).

2. Throttle valve positioning device according to Claim 1, **characterized in that** the throttle valve circumference (34; 134), at least on the side of the throttle valve shaft passage (44; 144) towards to the drive side, lies on the vacuum side with respect to the throttle valve shaft (20).

3. Throttle valve positioning device according to Claim 1 or 2, **characterized in that** the throttle valve (24; 124) is arranged at an acute angle to the throttle valve shaft (20; 120).

4. Throttle valve positioning device according to Claim 3, **characterized in that** the acute angle is between 5° and 25°.

5. Throttle valve positioning device according to Claim 3 or 4, **characterized in that** the throttle body (26; 126), in the region of the adjoining throttle valve circumference (34; 134), has a bend (36; 136) whose walls lie perpendicularly to the direction of inclination of the throttle valve (24; 124).

6. Throttle valve positioning device according to one of the preceding claims, **characterized in that** a parting line (30; 130) lies between the housing halves (14, 16; 114, 116) outside the contact region of the throttle valve circumference (34; 134) on the inside of the throttle body (26; 126).

7. Throttle valve positioning device according to one of the preceding claims, **characterized in that** the throttle valve shaft (20) is mounted in a closed bearing boss on the side of the throttle body (26) opposite the shaft passage (44) toward the drive.

8. Throttle valve positioning device according to Claim 7, **characterized in that** the bearing arrangement of the throttle valve shaft (20) is effected directly in the bearing boss (32) of the housing part (14), which is produced from plastic, e.g. a thermoset.

9. Throttle valve positioning device according to one of the preceding claims, **characterized in that** the throttle valve (24; 124) is provided with a sealing ring (40; 140) at its circumference (34; 134).

10. Throttle valve positioning device according to Claim 9, **characterized in that** the sealing ring (40; 140) is held in a circumferential groove (42) in a radially movable manner.

11. Throttle valve positioning device according to Claim 9 or 10, **characterized in that** the sealing ring (40) consists of PEEK with a filling of PTFE or of PTFE.

12. Throttle valve positioning device according to one of the preceding claims, **characterized in that** the throttle valve (24; 124) consists of a thermoset or of a thermoplastic.

13. Throttle valve positioning device according to Claim 12, **characterized in that** the throttle valve is made of filled PEI or filled PPS.

14. Throttle valve positioning device according to Claim 12 or 13, **characterized in that** the throttle valve (24; 124) is integrally moulded on a sleeve (38; 138) which is made of metal or plastic and which completely or partly encloses the throttle valve shaft (20; 120) and is secured to the latter.

15. Throttle valve positioning device according to Claim 14, **characterized in that** the sleeve (38; 138) of plastic is integrally moulded with the throttle valve (24; 124) on the throttle valve shaft (20; 120).

16. Throttle valve positioning device according to Claim 15, **characterized in that** the metallic sleeve is welded to the throttle valve shaft or is welded with the latter.

## Revendications

1. Dispositif de réglage pour papillons de régulation des gaz, comportant un boîtier (12; 112) qui forme une suspension (28, 32; 128, 130) pour un arbre (30; 130) du papillon de régulation des gaz et comprend une tubulure (26; 126) à papillon de régulation des gaz, dans laquelle peut pivoter un papillon (24; 124) de régulation des gaz monté sur l'arbre (20; 120) du papillon de régulation des gaz, lequel arbre débouche à travers une ouverture de traversée (44; 144) prévue pour l'arbre dans la tubulure (26; 126) à papillon de régulation des gaz, où ledit boîtier (12; 112) est réalisé en deux parties et où la périphérie (34; 134) du papillon (24; 124) de régulation des gaz se trouve au moins d'un côté près de l'arbre (20; 120) du papillon de régulation des gaz avec un certain écartement par rapport à une ouverture de traversée (44; 144) prévue pour l'arbre (20; 120) dans la tubulure (26; 126) à papillon de régulation des gaz, **caractérisé par le fait que** le boîtier (12) comporte, entre ses moitiés (14, 16), un actionneur (18) et, le cas échéant, une transmission (22) permettant de régler le papillon (24) de régulation des gaz par l'intermédiaire de l'arbre (20) du papillon de régulation des gaz.

2. Dispositif de réglage pour papillons de régulation des gaz selon la revendication 1, **caractérisé par le fait que** la périphérie (34; 134) du papillon de régulation des gaz se trouve, au moins sur le côté de l'ouverture de traversée (44; 144) pour l'arbre du papillon de régulation des gaz vers le côté entraînement, sur le côté dépression par rapport à l'arbre (20) du papillon de régulation des gaz.

3. Dispositif de réglage pour papillons de régulation des gaz selon la revendication 1 ou 2, **caractérisé par le fait que** le papillon (24; 124) de régulation des gaz est placé sous un angle aigu par rapport à l'arbre (20; 120) du papillon de régulation des gaz.

4. Dispositif de réglage pour papillons de régulation des gaz selon la revendication 3, **caractérisé par le fait que** l'angle aigu est compris entre 5° et 25°.

5. Dispositif de réglage pour papillons de régulation des gaz selon la revendication 3 ou 4, **caractérisé par le fait que** la tubulure (26; 126) à papillon de régulation des gaz a, dans la zone où s'applique la périphérie (34; 134) du papillon de régulation des gaz, un coude (36; 136) dont les parois sont perpendiculaires à la direction d'inclinaison du papillon (24; 124) de régulation des gaz.

6. Dispositif de réglage pour papillons de régulation des gaz selon l'une des revendications précédentes, **caractérisé par le fait qu'**une ligne de joint (30; 130) entre les parties du boîtier (14, 16; 114; 116) se trouve à l'extérieur de la zone d'application de la périphérie (34; 134) du papillon de régulation des gaz sur la face intérieure de la tubulure (26; 126) à papillon de régulation des gaz.

7. Dispositif de réglage pour papillons de régulation des gaz selon l'une des revendications 3 à 6, **caractérisé par le fait que** l'arbre (20) du papillon de régulation des gaz est suspendu dans un oeillet de palier fermé sur le côté de la tubulure (26) à papillon de régulation des gaz opposé à l'ouverture de traversée (44) pour l'arbre vers l'entraînement.

8. Dispositif de réglage pour papillons de régulation des gaz selon la revendication 7, **caractérisé par le fait que** la suspension de l'arbre (20) du papillon de régulation des gaz se fait directement dans l'oeillet de palier (32) de la partie (14) du boîtier fabriquée en matière plastique, par exemple, en matière thermodurcissable.

9. Dispositif de réglage pour papillons de régulation des gaz selon l'une des revendications précédentes, **caractérisé par le fait que** le papillon (24; 124) de régulation des gaz est doté sur sa périphérie (34; 134) d'une bague d'étanchéité (40; 140).

10. Dispositif de réglage pour papillons de régulation des gaz selon la revendication 9, **caractérisé par le fait que** la bague d'étanchéité (40; 140) est maintenue dans une rainure périphérique (42) tout en étant mobile dans le sens radial.

11. Dispositif de réglage pour papillons de régulation des gaz selon la revendication 9 ou 10, **caractérisé par le fait que** la bague d'étanchéité (40) est en polyarylétherketone, polyétherétherketone ou PEEK avec un remplissage en polytétrafluoréthylène ou PTFE ou bien en polytétrafluoréthylène ou PTFE pur.

12. Dispositif de réglage pour papillons de régulation des gaz selon l'une des revendications précédentes, **caractérisé par le fait que** le papillon (24; 124) de régulation des gaz est en résine thermodurcissable ou thermoplastique.

13. Dispositif de réglage pour papillons de régulation des gaz selon la revendication 12, **caractérisé par le fait que** le papillon de régulation des gaz est en polyétherimide (PEI) plein ou en sulfure de polyphénylène (PPS) plein.

14. Dispositif de réglage pour papillons de régulation des gaz selon la revendication 12 ou 13, **caractérisé par le fait que** le papillon (24; 124) de régulation des gaz est injecté sur une douille (38; 138) en métal ou en matière plastique, qui entoure complètement ou partiellement l'arbre (20; 120) du papillon de régulation des gaz et y est fixée.

15. Dispositif de réglage pour papillons de régulation des gaz selon la revendication 14, **caractérisé par le fait que** la douille (38; 138) en matière plastique est injectée avec le papillon (24; 124) de régulation des gaz sur l'arbre (20; 120) du papillon de régulation des gaz.

16. Dispositif de réglage pour papillons de régulation des gaz selon la revendication 15, **caractérisé par le fait que** la douille métallique est soudée à l'arbre du papillon de régulation des gaz ou soudée avec ce dernier.
